# EUROPÄISCHE PATENTSCHRIFT

(11) **EP 2 802 478 B1**
(45) Veröffentlichungstag und Bekanntmachung des Hinweises auf die Patenterteilung: **03.08.2022**
(21) Anmeldenummer: 13715171.8
(22) Anmeldetag: 28.03.2013
(51) Int. Cl.: B60L 9/00, B60L 1/00, B60L 1/02, B60L 1/14, B60L 9/22, B61C 17/12, B61L 15/00, H02J 3/14, B60R 16/023, H02J 13/00

(54) **LEISTUNGSVERWALTUNGSEINRICHTUNG FÜR EIN SCHIENENFAHRZEUG**
POWER MANAGEMENT DEVICE FOR A RAIL VEHICLE
DISPOSITIF DE GESTION DE PUISSANCE POUR UN VÉHICULE SUR RAILS

(30) Priorität: 30.03.2012 DE 102012205215
(43) Veröffentlichungstag der Anmeldung: 19.11.2014
(73) Patentinhaber: Siemens Mobility GmbH, 81739 München (DE)
(72) Erfinder: DI BONAVENTURA, Stefan, 91186 Büchenbach (DE); STEINHAUER, Gerhard, 47877 Willich (DE)
(86) Internationale Anmeldenummer: PCT/EP2013/056658
(87) Internationale Veröffentlichungsnummer: WO 2013/144272

(56) Entgegenhaltungen:
- EP-A1- 1 253 059
- EP-A1- 1 719 688
- US-A- 5 293 632
- US-A1- 2010 102 625
- US-A1- 2011 270 475

## Beschreibung

Die Erfindung betrifft eine Leistungsverwaltungseinrichtung für ein Schienenfahrzeug, welches mehrere Verbrauchereinheiten aufweist, die jeweils einen oder mehrere elektrischen Verbraucher umfassen und durch mehrere Leistungsversorgungseinheiten versorgt werden, mit einem Satz von lokalen Leistungsverwaltungseinheiten, die jeweils zumindest einer Verbrauchereinheit zugeordnet sind, und einer fahrzeugweiten Leistungsverwaltungsvorrichtung, die im Betrieb Leistungsdaten der Leistungsversorgungseinheiten empfängt und zur Datenkommunikation mit den lokalen Leistungsverwaltungseinheiten zumindest auf der Basis der Leistungsdaten vorgesehen ist, wobei die lokalen Leistungsverwaltungseinheiten zur Datenkommunikation mit einer zugeordneten Verbrauchereinheit vorgesehen sind, und wobei die zugeordnete Verbrauchereinheit dazu vorgesehen ist, eine Leistungskenngröße an die lokale Leistungsverwaltungseinheit zu melden, die auf eine aktuell benötigte Leistung bezogen ist.

Elektrische Verbraucher, die an Bord eines Schienenfahrzeugs montiert sind, beziehen ihre elektrische Leistung aus einem so genannten Bordnetz, welches eine fahrzeugweite elektrische Versorgungseinrichtung darstellt. Das Bordnetz zur Versorgung der unter dem Begriff "Hilfsbetriebe" genannten Verbraucher wird typischerweise von mehreren Hilfsbetriebeumrichtern (oder HBU) mit elektrischer Energie versorgt, die von einer Bahnnetzversorgung bezogen wird. In modernen Schienenfahrzeugen speisen mehrere Hilfsbetriebeumrichter synchron ein als Drehstromnetz ausgebildetes Bordnetz.

Herkömmlicherweise werden diese Hilfsbetriebeumrichter aus technischen und betriebswirtschaftlichen Gründen derart ausgelegt, dass die Summenleistung aller synchronisierten Hilfsbetriebeumrichter gerade der für einen Betrieb aller Verbraucher notwendigen Leistung entspricht. Kommt es während eines Betriebs des Schienenfahrzeugs zu einem Ausfall von Hilfsbetriebeumrichtern, dann übersteigt die benötigte Verbraucherleistung die maximal verfügbare elektrische Leistung.

Um einen Betrieb des Schienenfahrzeugs mit dieser reduzierten Leistung zu ermöglichen wird herkömmlicherweise eine Lastverwaltung eingesetzt, die auf eine bestimmte Zugkonfiguration bzw. Zugzusammenstellung abgestimmt ist. In einem derartigen, "statischen" Lastmanagement muss eine Leistungsverwaltungseinheit, die zur Verwaltung der Leistung einer Verbrauchereinheit dient, stets von der Leistungsverteilung hinsichtlich der weiteren Verbrauchereinheiten Kenntnis haben. Da diese Verteilung stark mit der Zugkonfiguration verbunden ist, muss eine derartige Leistungsverwaltungsstrategie bei einer geänderten Zugzusammenstellung angepasst werden, was sich mit einem nicht unerheblichen Aufwand verwirklichen lässt.

Aus der US 2010/0102625 A1 ist ein gattungsgemäßes Leistungssteuersystem bekannt.

Aus der EP 1 253 059 A1 ist Steuersystem für ein Schienenfahrzeug bekannt. Das Schienenfahrzeug ist mit einem Satz von Stromrichtern ausgebildet, welche mittels einer zentralen Einrichtung gesteuert werden, wobei die Steuerung einen Radsatzschlupf sowie eine Erhöhung einer Temperatur der Schaltventile einer Leistungselektronik betreffen.

Aus der US 5,293,632 ist ein Schienenfahrzeug mit mehreren Leistungsversorgungseinheiten bekannt, bei welchem eine Verwaltung einer verfügbaren Leistung beim Ausfall einer Leistungsversorgungseinheit erfolgt. Dabei werden Verbraucher abgeschaltet und/oder mit geringerer Leistung betrieben.

Der Erfindung liegt die Aufgabe zugrunde, eine gattungsgemäße Leistungsverwaltungseinrichtung für ein Schienenfahrzeug bereitzustellen, wobei eine schnelle und vorteilhafte Anpassung der Leistungsverteilung an einen tatsächlichen, aktuellen Leistungsverbrauch erreicht werden kann.

Hierzu wird vorgeschlagen, dass die zugeordnete Verbrauchereinheit dazu vorgesehen ist, eine Leistungskenngröße an die lokale Leistungsverwaltungseinheit zu melden, die auf eine benötigte Leistung bezogen ist.

Durch den Satz von lokalen Leistungsverwaltungseinheiten kann eine Leistungsverwaltungsstrategie der lokalen Verbrauchereinheiten erreicht werden, die weitgehend von einer aktuellen Zugkonfiguration unabhängig ist. Die Leistungsverwaltung wird vorteilhafterweise auf zwei unterschiedliche Verwaltungsebenen verteilt, und zwar auf eine lokale Leistungsverwaltung und eine dieser übergeordnete fahrzeugweite Leistungsverwaltung. Mittels der fahrzeugweiten Leistungsverwaltung kann eine weitgehende Entkopplung der lokalen Leistungsverwaltung von der mit der Zugzusammenstellung zusammenhängenden Art und Anzahl der Leistungsversorgungseinheiten bzw. Art und Anzahl der weiteren Verbrauchereinheiten erreicht werden. Eine Anpassung der Leistungsverwaltungsstrategie kann besonders einfach durch eine Aktualisierung der Leistungsdaten der Leistungsversorgungseinheiten aufgrund einer veränderten Zugzusammenstellung bzw. des Ausfalls einer Leistungsversorgungseinheit erfolgen. Diese Anpassung kann insbesondere automatisch erfolgen, d.h. ohne dass ein manueller Eingriff in die Leistungsverwaltungsstrategie notwendig ist. Dabei wird automatisch eine sich verändernde Anzahl von Leistungsversorgungseinheiten und/oder Verbrauchern erfasst.

Eine Datenkommunikation zwischen der lokalen Leistungsverwaltungseinheit und der zugeordneten Verbrauchereinheit erfolgt vorzugsweise zwischen der lokalen Verwaltungseinheit und zumindest einer Verbrauchersteuerung, die zur Steuerung eines oder mehrerer Verbraucher der Verbrauchereinheit dient und mittelbar oder unmittelbar über eine Datenverbindung mit der lokalen Leistungsverwaltungseinheit verbunden ist.

Die zugeordnete Verbrauchereinheit ist erfindungsgemäß dazu vorgesehen, eine Leistungskenngröße an die lokale Leistungsverwaltungseinheit zu melden, die auf eine - insbesondere momentan - benötigte Leistung bezogen ist.

Erfindungsgemäß ist die lokale Leistungsverwaltungseinheit dazu vorgesehen, auf Basis der gemeldeten Leistungskenngröße der Verbrauchereinheit einen aktuell nicht zugeteilten Anteil einer für die Verbrauchereinheit maximal verfügbaren Leistung als eine Leistungsreserve zu behandeln, welche als eine Verwaltungsmaßnahme einem Verbraucher zuteilbar ist.

Meldet eine Verbrauchereinheit bzw. einer ihrer Verbraucher, der bzw. dem eine Leistung bereits zugeteilt wurde, eine geringe oder Null-Leistung, kann die Leistungsverwaltungsstrategie vorsehen, dass die ungebrauchte Leistung als Leistungsreserve für weitere Verbraucher der Verbrauchereinheit behandelt wird. Die Meldung hinsichtlich einer tatsächlichen Leistungsaufnahme kann insbesondere bei so genannten "kontinuierlichen" Verbrauchern einfach erfolgen, wie insbesondere bei einem Batterieladegerät, da diese Verbraucher typischerweise über eine interne Sensoreinheit, z.B. einen Strommesser verfügen. Die auf eine Leistung bezogene Leistungskenngröße kann der tatsächliche Wert der Leistung und/oder eine Kenngröße sein, die einen Bezug auf die Leistung hat, wie insbesondere eine Spannungs- bzw. Stromkenngröße oder eine prozentuale Angabe.

Erfindungsgemäß ist zumindest eine lokale Leistungsverwaltungseinheit, die einer Verbrauchereinheit mit mehreren Verbrauchern zugeordnet ist, dazu vorgesehen, eine einen dieser Verbraucher betreffende Verwaltungsmaßnahme in Abhängigkeit einer diesem Verbraucher zugeordneten Priorität gegenüber den weiteren Verbrauchern der Verbrauchereinheit zu treffen.

So kann beispielsweise ein besonders ungünstiger Fall vermieden werden, bei welchem ein für die Fahrfähigkeit des Schienenfahrzeugs entscheidendes Aggregat ausgeschaltet wird. Hierdurch können Verwaltungsmaßnahmen, die in Bezug auf den Fahrkomfort und/oder die Fahrfähigkeit des Schienenfahrzeugs nachteilig sind, vermieden werden.

Unter einem "Verbraucher" soll insbesondere eine elektrische Funktionseinheit verstanden werden, die über eine reine Antriebs- oder Bremsfunktion hinaus, d.h. unterschiedlich von der Erzeugung eines Antriebs- bzw. Bremsmoments des Schienenfahrzeugs, zur Ausführung einer Funktion im Betrieb des Schienenfahrzeugs dient. Unter diesem Begriff kann insbesondere "Hilfsbetrieb" verstanden werden.

Unter einer "Leistungsversorgungseinheit" soll insbesondere eine Einheit verstanden werden, die zum Speisen eines für die Versorgung der Verbrauchereinheiten notwendigen Bordnetzes mit elektrischer Energie vorgesehen ist. Die Leistungsversorgungseinheit dient vorzugsweise zum Speisen eines als Wechsel-, insbesondere als Drehstromnetz ausgebildeten Bordnetzes. Insbesondere ist zumindest eine Leistungsversorgungseinheit als Hilfsbetriebeumrichter ausgebildet. Alternativ kann eine Leistungsversorgungseinheit von einer Einrichtung eines Vorspannfahrzeugs gebildet sein oder sie kann eine bodengebundene Einspeisstelle sein, wie insbesondere eine Werkstatteinspeisung.

Unter "vorgesehen" soll insbesondere speziell ausgestattet, ausgebildet, ausgeführt und/oder programmiert verstanden werden.

Unter einer "fahrzeugweiten" Einheit soll insbesondere eine Einheit verstanden werden, die hinsichtlich ihres Einsatzbereichs bzw. Wirkungsbereichs auf das gesamte Schienenfahrzeug bezogen ist. Bei einer "lokalen" Einheit bezieht sich der zugeordnete Einsatz- bzw. Wirkungsbereich zweckmäßigerweise auf einen räumlich begrenzten Teilabschnitt des Schienenfahrzeugs, in welchem insbesondere eine zugeordnete Verbrauchereinheit angeordnet ist.

Unter einer Datenkommunikation, die "auf der Basis" der Leistungsdaten erfolgt, soll insbesondere verstanden werden, dass die Datenkommunikation in zumindest einer Hinsicht die Leistungsdaten berücksichtigt. Beispielsweise werden mit der Datenkommunikation Daten übermittelt, die von den Leistungsdaten abhängen. Die Leistungsdaten können von den Leistungsversorgungseinheiten unaufgefordert und/oder nach Abfrage übermittelt werden.

Der Informationsgehalt der Leistungsdaten kann in verschiedenen Ausführungen unterschiedlich sein. Beispielsweise können die Leistungsdaten jeweils eine Information über den Betriebszustand der Leistungsversorgungseinheiten sein. Aus diesen Leistungsdaten, die z.B. lediglich einen fehlerfreien Betrieb oder einen Ausfall einer bestimmten Leistungsversorgungseinheit ("An-/Aus-Zustand") signalisieren, kann eine Information über die maximale, für das gesamte Bordnetz verfügbare Leistung hergeleitet werden.

Um eine präzise Leistungsverwaltung zu erreichen wird jedoch vorgeschlagen, dass die Leistungsdaten von Leistungen abhängen, die - insbesondere momentan - mittels der Leistungsversorgungseinheiten verfügbar sind. Mit den Leistungsdaten kann z.B. eine Information über ein Intervall, in welchem der tatsächliche Wert einer erzeugbaren Leistung liegt, und/oder eine Information über diesen tatsächlichen Wert übermittelt werden. Die Leistungsdaten können Leistungswerte und/oder Kenngrößen sein, die einen Bezug auf eine Leistung haben, wie insbesondere eine Spannungs- bzw. Stromkenngröße oder eine prozentuale Angabe.

Außerdem wird vorgeschlagen, dass die fahrzeugweite Leistungsverwaltungsvorrichtung dazu vorgesehen ist, einer lokalen Leistungsverwaltungseinheit eine Leistungskenngröße mitzuteilen, die auf eine Leistung bezogen ist, welche für eine ihr zugeordnete Verbrauchereinheit verfügbar ist. Vorzugsweise ist die mitgeteilte Leistungskenngröße auf die für die Verbrauchereinheit maximal zur Verfügung stehende Leistung bezogen. Die mitgeteilte Leistungskenngröße wird zweckmäßigerweise auf der Grundlage der Leistungsdaten der Leistungsversorgungseinheiten und insbesondere auch durch Berücksichtigung des maximalen Leistungsbedarfs der zugeordneten Verbrauchereinheit ermittelt. Die auf eine Leistung bezogene Leistungskenngröße kann der tatsächliche Wert der Leistung und/oder eine Kenngröße sein, die einen Bezug auf die Leistung hat, wie insbesondere eine Spannungs- bzw. Stromkenngröße oder eine prozentuale Angabe.

Um vorteilhaft Konflikte in der Beanspruchung von Leistungsanteilen zu vermeiden wird in diesem Zusammenhang vorgeschlagen, dass die zugeordnete Verbrauchereinheit dazu vorgesehen ist, bei einem anstehenden Einschaltvorgang eines Verbrauchers der Verbrauchereinheit eine Meldung an die lokale Leistungsverwaltungseinheit zu senden. Unter einem "Einschaltvorgang" soll insbesondere ein Vorgang verstanden werden, bei welchem ein Verbraucher ausgehend von einem inaktiven Zustand in einen Betriebszustand geschaltet wird oder ein Verbraucher ausgehend von einem Betriebszustand gemäß einer ersten Leistungsstufe in einen zweiten Betriebszustand gemäß einer zweiten Leistungsstufe umgeschaltet wird, in welcher die beanspruchte Leistung höher ist.

Eine schnelle Leistungsanpassung kann vorgenommen werden, wenn die lokale Leistungsverwaltungseinheit dazu vorgesehen ist, eine Verwaltungsmaßnahme auf der Basis der Meldung zu treffen. Durch eine Beschränkung der Verwaltungsmaßnahme auf die lokale Ebene der Leistungsverwaltungseinheit kann die Leistungsanpassung von fahrzeugweiten Parametern, wie insbesondere von der Zugzusammenstellung vorteilhaft entkoppelt werden.

Um vorteilhaft Konflikte bei Einschaltvorgängen von Verbrauchern zu vermeiden wird vorgeschlagen, dass zumindest eine der lokalen Leistungsverwaltungseinheiten dazu vorgesehen ist, abhängig von einem Bedarf, der für einen Einschaltvorgang einer ihr zugeordneten Verbrauchereinheit notwendig ist, eine Meldung an die fahrzeugweite Leistungsverwaltungsvorrichtung mittels der Datenkommunikation zu senden. Der Bedarf kann ein Leistungs- oder Strombedarf sein.

In diesem Zusammenhang wird vorgeschlagen, dass die fahrzeugweite Leistungsverwaltungsvorrichtung dazu vorgesehen ist, auf der Basis der Meldung und von Daten zumindest einer weiteren lokalen Leistungsverwaltungseinheit eine Verwaltungsmaßnahme zu treffen. Hierdurch kann eine fahrzeugweite Koordinierung von Einschaltvorgängen erreicht werden. Es können ein gleichzeitiges Einschalten von Verbrauchern, die beim Einschalten eine hohe Spitze des beanspruchten Stroms bewirken, und eine dadurch verursachte Instabilität im gesamten Leistungskreis vermieden werden. Als Verwaltungsmaßnahme kann die fahrzeugweite Leistungsverwaltungsvorrichtung einen Einschaltvorgang freigeben, verzögern oder verhindern. Eine Freigabe kann z.B. eine angepasste fahrzeugweite Leistungsverteilung voraussetzen. Die Verwaltungsmaßnahme kann direkt von der fahrzeugweiten Leistungsverwaltungsvorrichtung oder durch Weiterleitung von Befehlen an eine lokale Leistungsverwaltungseinheit bzw. an mehrere Leistungsverwaltungseinheiten ausgeführt werden.

Ferner wird vorgeschlagen, dass die lokalen Leistungsverwaltungseinheiten jeweils einem unterschiedlichen Wagen des Schienenfahrzeugs zugeordnet sind. Hierbei beschränkt sich der Einsatz- bzw. Wirkungsbereich der lokalen Leistungsverwaltungseinheiten auf einen Wagen, wodurch eine besonders hohe Flexibilität der Leistungsverwaltungsstrategie des Schienenfahrzeugs hinsichtlich einer Anpassung der Zugzusammenstellung erreicht werden kann. Es wird in einer vorteilhaften Weiterbildung der Erfindung vorgeschlagen, dass die lokalen Leistungsverwaltungseinheiten jeweils im ihnen zugeordneten Wagen angeordnet sind.

Ferner wird ein Schienenfahrzeug, insbesondere ein schienengebundenes Triebfahrzeug vorgeschlagen, mit einem ersten Satz von Wagen, die jeweils eine Leistungsversorgungseinheit aufweisen, und einem zweiten Satz von Wagen, und einer erfindungsgemäßen Leistungsverwaltungseinrichtung, in der die lokalen Leistungsverwaltungseinheiten jeweils einem unterschiedlichen Wagen zugeordnet sind. Hierdurch kann ein Schienenfahrzeug bereitgestellt werden, bei welchem sich die Leistungsverwaltung einfach und flexibel an eine variable Zugzusammenstellung anpassen lässt.

Insbesondere wird vorgeschlagen, dass ein Wagen des ersten Satzes als Traktionswagen ausgebildet ist. Hierdurch kann eine Zugzusammenstellung hinsichtlich der Traktionsleistung flexibel an einen bestimmten Anwendungsfall angepasst werden, wobei eine Anpassung der Leistungsverwaltung besonders einfach, insbesondere automatisch erfolgen kann. Unter einem "Traktionswagen" soll insbesondere ein Wagen verstanden werden, welche Antriebsachsen und eine für diese vorgesehene Antriebseinheit aufweist.

Es wird ein Ausführungsbeispiel der Erfindung anhand der Zeichnungen erläutert. Es zeigen:
- Figur 1:: ein Schienenfahrzeug mit einem Satz von Leistungsversorgungseinheiten und einer Mehrzahl von elektrischen Verbrauchern
- Figur 2:: eine Leistungsversorgungseinheit des Schienenfahrzeugs und
- Figur 3:: eine mit den Leistungsversorgungseinheiten und den Verbrauchern verbundene Leistungsverwaltungsvorrichtung.

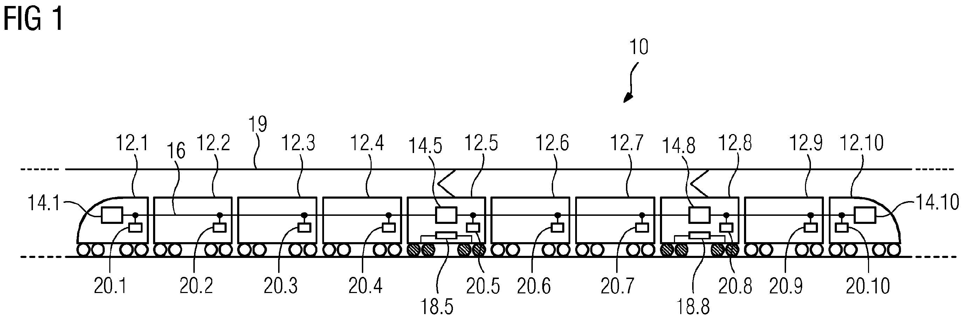

Figur 1 zeigt ein Schienenfahrzeug 10 in einer stark schematisierten Seitenansicht. Das Schienenfahrzeug 10 weist in der gezeigten, beispielhaften Zugzusammenstellung einen Verband von zehn Wagen 12.1 bis 12.10 auf. Im betrachteten Ausführungsbeispiel ist das Schienenfahrzeug 10 als Triebfahrzeug ausgebildet, wobei die Endwagen 12.1 und 12.10 jeweils mit einem Fahrgastraum und einem Führerraum ausgestattet sind. Der Satz von Wagen 12 kann in zwei Gruppen unterteilt werden. Eine erste Untergruppe mit den Endwagen 12.1, 12.10, und zwei Mittelwagen 12.5, 12.8 sind jeweils mit einer Leistungsversorgungseinheit 14.1, 14.5, 14.8 bzw. 14.10 ausgestattet, die jeweils zur Versorgung des Schienenfahrzeugsbordnetzes 16 vorgesehen ist, wie weiter unten näher beschrieben. In der Figur ist die so genannte "Zugsammelschiene" des Bordnetzes 16 dargestellt.

Ferner sind die Mittelwagen 12.5, 12.8 jeweils als Traktionswagen ausgebildet (auch "Power-Car" genannt), der Antriebsachsen und eine für deren Antreiben vorgesehene, vollständige Antriebseinheit 18.5 bzw. 18.8 aufweist. Diese vollständige Antriebseinheit 18 weist jegliche Komponenten auf, die ausgehend von einer durch ein Bahnnetz 19 bereit gestellten Spannung bzw. einer von einem Generator bereitgestellten Spannung zur Erzeugung eines Antriebsmoments der Antriebsachsen notwendig sind. Insbesondere umfasst die vollständige Antriebseinheit 18 zumindest eine Spannungsumwandlungseinheit, eine Stromrichtereinheit und einen mit dieser in Wirkverbindung stehenden Antriebsmotor. Durch die beschriebene Ausbildung des Traktionswagens, insbesondere aufgrund der Tatsache, dass die Komponenten der vollständigen Antriebseinheit 18 im Traktionswagen angeordnet sind, kann dieser jederzeit von der Zugzusammenstellung entfernt werden bzw. einer bestehenden Zugzusammenstellung hinzugefügt werden, ohne dabei die Fahrfähigkeit des Schienenfahrzeugs 10 zu beeinträchtigen.

Es kann daher eine Flotte von Schienenfahrzeugen bereitgestellt werden, bei welcher die Zugzusammenstellung hinsichtlich der Traktionsleistung an verschiedene Einsatzfälle flexibel angepasst werden kann.

Die zweite Untergruppe von Wagen ist von den übrigen Mittelwagen gebildet, die weder über eine Leistungsversorgungseinheit 14 noch über eine Antriebseinheit 18 verfügen.

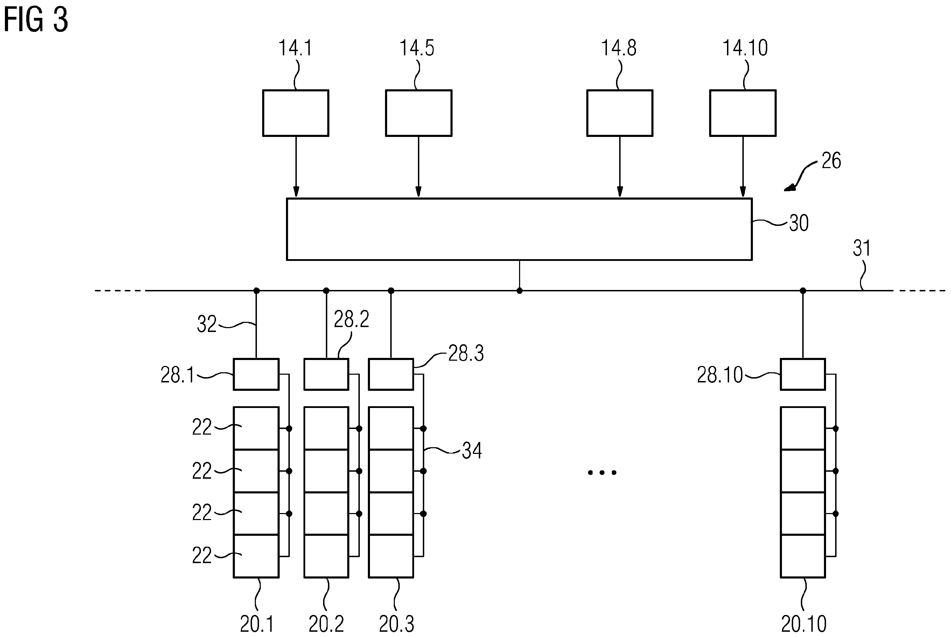

Die Wagen 12 weisen außerdem jeweils eine Verbrauchereinheit 20 auf, die einen oder mehrere elektrischen Verbraucher 22 umfasst (siehe Figur 3). Diese elektrischen Verbraucher 22 stellen Funktionseinheiten - auch "Hilfsbetriebe genannt - dar, die über die Bereitstellung eines Antriebs- bzw. Bremsmoments hinaus zur Erledigung weiterer betrieblicher Funktionen vorgesehen sind. Ein elektrischer Verbraucher kann z.B. eine Beleuchtung, ein Energiespeicher, ein Klimagerät, eine Türeinheit usw. sein. Die Verbrauchereinheiten 20 beziehen ihre elektrische Leistung vom Bordnetz 16, welches mittels der Leistungsversorgungseinheiten 14 mit elektrischer Energie versorgt wird.

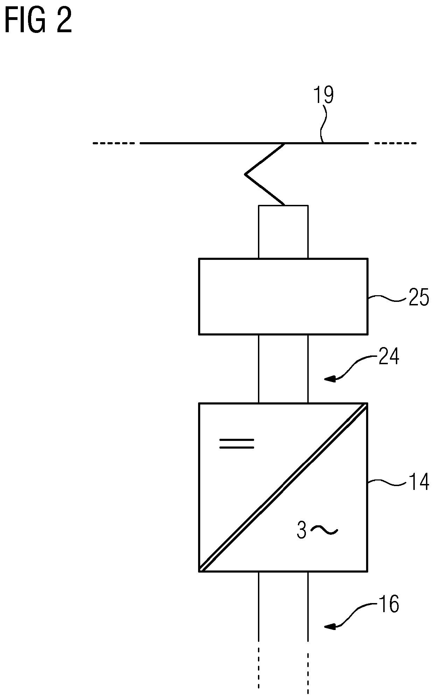

Die Ausführung der Leistungsversorgungseinheiten 14 wird anhand der Figur 2 näher erläutert. Der Übersichtlichkeit halber ist in Figur 2 lediglich eine Leistungsversorgungseinheit dargestellt. Die Leistungsversorgungseinheiten 14 sind jeweils als Hilfsbetriebeumrichter ausgebildet, der ausgehend von einem Gleichspannungszwischenkreis 24 das als Drehstromnetz ausgebildete Bordnetz 16 mit Energie versorgt. Der Gleichspannungszwischenkreis 24 wird ausgehend von der im Bahnnetz 19 bereit gestellten Hochspannung mittels einer Spannungsumwandlung und Spannungsgleichrichtung einer Einheit 25 bereit gestellt.

Mit dem Entfernen bzw. Hinzufügen eines Traktionswagens nach dem oben beschriebenen flexiblen Konzept hängt die Anzahl der Verbrauchereinheiten 20 und der verfügbaren Leistungsversorgungseinheiten 14 von der aktuellen Zugzusammenstellung ab. Für die Verwaltung der aus dem Bordnetz 16 beziehbaren Leistung ist eine Leistungsverwaltungseinrichtung 26 vorgesehen, die anhand von Figur 3 näher erläutert wird.

Figur 3 zeigt ein schematisches Diagramm, in welchem die verfügbaren Leistungsversorgungseinheiten 14, die Verbrauchereinheiten 20 und die Leistungsverwaltungseinrichtung 26 dargestellt sind.

Jeder Verbrauchereinheit 20.1 bis 20.10 ist eine Leistungsverwaltungseinheit 28.1 bis 28.10 zugeordnet. Vorzugsweise besteht eine eindeutige Zuordnung einer Leistungsverwaltungseinheit 28 zu einer Verbrauchereinheit 20. Die Leistungsverwaltungseinheiten 28 sind vorzugsweise jeweils lokal im entsprechenden Wagen 12 angeordnet. Die Leistungsverwaltungseinrichtung 26 weist ferner eine übergeordnete, fahrzeugweite Leistungsverwaltungsvorrichtung 30 auf, die mit den lokalen Leistungsverwaltungseinheiten 28 über eine zur Übermittlung von Daten vorgesehene Verbindung - z.B. über einen sich fahrzeugweit erstreckenden Datenbus 31 der Fahrzeugleittechnik - verbunden ist. Die fahrzeugweite Leistungsverwaltungsvorrichtung 30 ist dazu vorgesehen, eine Datenkommunikation mit jeder lokalen Leistungsverwaltungseinheit 28 herzustellen. Hierbei erfolgt ein Datenaustausch zwischen der fahrzeugweiten Leistungsverwaltungsvorrichtung 30 und den lokalen Leistungsverwaltungseinheiten 28 über Datenverbindungen 32, die insbesondere mit dem Datenbus 31 verbunden sind.

Es werden im Folgenden verschiedene Betriebsmodi der Leistungsverwaltungseinrichtung 26 im Einzelnen erläutert.

Hinsichtlich der Verwaltung der Bordnetzleistungsverteilung unter den vorhandenen Verbrauchereinheiten 20 werden von der fahrzeugweiten Leistungsverwaltungsvorrichtung 30 Leistungsdaten der Leistungsversorgungseinheiten 14 empfangen. Hierbei werden die momentan verfügbaren Leistungen der Leistungsversorgungseinheiten 14 mittels der Leistungsverwaltungsvorrichtung 30 gesammelt.

Die fahrzeugweite Leistungsverwaltungsvorrichtung 30 ermittelt außerdem den maximalen Leistungsbedarf, der von jeder Verbrauchereinheit 20 beansprucht werden kann. Es wird - auf der Basis dieser Ermittlung und der Leistungsdaten der Leistungsversorgungseinheiten 14 - mittels der Leistungsverwaltungsvorrichtung 30 lokalen Leistungsverwaltungseinheiten 28 eine Leistung mitgeteilt, die für die zugeordnete Verbrauchereinheit 20 zugeteilt wird. Insbesondere entspricht die mitgeteilte Leistung der für die entsprechende Verbrauchereinheit 20 maximal zur Verfügung stehenden Leistung.

Die lokalen Leistungsverwaltungseinheiten 28 sind außerdem dazu vorgesehen, eine Datenkommunikation mit ihrer zugeordneten Verbrauchereinheit 20 herzustellen. Hierbei erfolgt - über eine Datenverbindung 34 - ein Datenaustausch zwischen der Leistungsverwaltungseinheit 28 und den lokalen Steuerungen der elektrischen Verbraucher 22 der zugeordneten Verbrauchereinheit 20.

Auf der Basis der für die entsprechenden Verbrauchereinheit 20 zur Verfügung stehenden Leistung erfolgt mittels der Leistungsverwaltungseinheit 28 eine lokale Verteilung dieser Leistung unter den verschiedenen Verbrauchern 22 der Verbrauchereinheit 20. Diese Verteilung basiert auf einer Priorität, die jedem Verbraucher 22 zugeordnet ist.

Für jede Zuschaltung eines bis dahin inaktiven Verbrauchers 22 erfolgt eine Meldung der Verbrauchersteuerung an die zugeordnete Leistungsverwaltungseinheit 28. Mit dieser Meldung wird der anstehende Leistungsbedarf mitgeteilt. Ist ein noch nicht zugeteilter Anteil der für die Verbrauchereinheit 20 maximal verfügbaren Leistung für den Einschaltvorgang des Verbrauchers 22 ausreichend, erfolgt eine Meldung der lokalen Leistungsverwaltungseinheit 28, dass der Einschaltvorgang freigegeben wird. Die Freigabe bei genügender Leistung kann ggf. von der Priorität des anfragenden Verbrauchers abhängen.

Ist der oben genannte Anteil nicht ausreichend, können - abhängig von der dem anfragenden Verbraucher 22 zugewiesenen Priorität - verschiedene Verwaltungsmaßnahmen getroffen werden:
Bei einer niedrigen Priorität wird die Freigabe des Einschaltvorgangs durch die Leistungsverwaltungseinheit 28 verweigert.

Weist der anfragende Verbraucher 22 eine mittlere Priorität auf, so wird der noch zur Verfügung stehende Anteil der maximal verfügbaren Leistung diesem Verbraucher 22 zugeteilt. Der Verbraucher 22 wird demnach mit einer geringeren Leistung als der gemeldete Leistungsbedarf betrieben.

Ist die Priorität des Verbrauchers 22 höher als die mittlere Priorität, so kann die Leistungsverwaltungseinheit 28 als Verwaltungsmaßnahme einen Leistungsteil einem Verbraucher entziehen, dem eine Leistung bereits zugeteilt war und der eine niedrigere Priorität aufweist als der anfragende Verbraucher 22. Dieser entzogene Leistungsteil wird dann dem anfragenden Verbraucher 22 zugeteilt, um die fehlende Leistung für den Einschaltvorgang auszugleichen.

Nach erfolgtem Einschalten eines Verbrauchers 22 bzw. während des Betriebs des Verbrauchers 22 meldet dessen Verbrauchersteuerung die momentan benötigte Leistung an die lokale Leistungsverwaltungseinheit 28. Ist diese Leistung null oder kleiner als die zugeteilte Leistung, da z.B. der Verbraucher 22 dessen Aufgabe erledigt hat, wird der nicht gebrauchte Leistungsüberschuss mittels der Leistungsverwaltungseinheit 28 als Leistungsreserve für die Zuteilung zu einem weiteren Verbraucher 22 der gleichen Verbrauchereinheit 20 behandelt.

Erfolgt wie oben beschrieben eine verbraucherseitige Einschaltanfrage an eine lokale Leistungsverwaltungseinheit 28 kann abhängig von dem gemeldeten Leistungs- oder Strombedarf für den Einschaltvorgang die Anfrage durch die lokale Leistungsverwaltungseinheit 28 an die fahrzeugweite Leistungsverwaltungsvorrichtung 30 weitergeleitet werden, insbesondere wenn der Bedarf einen voreingestellten Schwellwert überschreitet. Die Leistungsverwaltungsvorrichtung 30 koordiniert diese Anfrage mit dem Betrieb weiterer Verbrauchereinheiten 20, indem für das Treffen einer Verwaltungsmaßnahme in Bezug auf die Anfrage Leistungsdaten weiterer Leistungsverwaltungseinheiten 28 berücksichtigt werden. Besteht keine Gefahr eines Konfliktes mit einem weiteren, anstehenden Einschaltvorgang kann die fahrzeugweite Leistungsverwaltungsvorrichtung 30 den Einschaltvorgang des anfragenden Verbrauchers 22 freigeben. Wenn dies nicht gegeben ist, kann der Einschaltvorgang verzögert bzw. verweigert werden, um ein gleichzeitiges Einschalten von mehreren Verbrauchern zu vermeiden, die jeweils einen hohen Strom- bzw. Leistungsbedarf für deren Einschalten haben.

Die oben beschriebenen Betriebsmodi finden auch für die Anfrage eines bestimmten, bis dahin bereits aktiven Verbrauchers Anwendung, welcher mit verschiedenen Leistungsstufen betreibbar ist und die Umschaltung in eine Stufe erhöhten Leistungsbedarfs meldet. Abhängig von dem gemeldeten Leistungsbedarf für die Umschaltung in die höhere Stufe, von der Priorität des anfragenden Verbrauchers 22 und/oder der für die entsprechende Verbrauchereinheit 20 zur Verfügung stehende Leistung, können wie oben beschrieben verschiedene Verwaltungsmaßnahmen getroffen werden.

Erfolgt eine Änderung der Zugzusammenstellung, bei der eine Leistungsversorgungseinheit 14 entfernt oder hinzugefügt wird, wird einfach die für das gesamte Bordnetz 16 maximal, anhand der neuen Anzahl von Leistungsversorgungseinheiten 14 erzeugbare Leistung erneut ermittelt. Dies gilt auch im Falle eines fehlerhaften Betriebs bzw. eines Ausfalls einer der Leistungsversorgungseinheiten 14. Hierbei erfolgt eine angepasste Leistungsverteilung auf die Verbraucher 22 angesichts der reduzierten verfügbaren Leistung des Bordnetzes 16. Es werden Verbrauchern 22, beginnend bei den Verbrauchern mit der niedrigsten Priorität, derart Leistung entzogen, dass in Summe die Verbraucherleistung und die Versorgungsleistung im Gleichgewicht stehen.

## Patentansprüche

1. Leistungsverwaltungseinrichtung für ein Schienenfahrzeug (10), welches mehrere Verbrauchereinheiten (20.1-20.10) aufweist, die jeweils einen oder mehrere elektrischen Verbraucher (22) umfassen und durch mehrere Leistungsversorgungseinheiten (14.1, 14.5, 14.8, 14.10) versorgt werden, mit einem Satz von lokalen Leistungsverwaltungseinheiten (28.1 - 28.10), die jeweils zumindest einer Verbrauchereinheit (20.1 - 20.10) zugeordnet sind, und einer fahrzeugweiten Leistungsverwaltungsvorrichtung (30), die im Betrieb Leistungsdaten der Leistungsversorgungseinheiten (14.1, 14.5, 14.8, 14.10) empfängt und zur Datenkommunikation mit den lokalen Leistungsverwaltungseinheiten (28.1 - 28.10) zumindest auf der Basis der Leistungsdaten vorgesehen ist, wobei die lokalen Leistungsverwaltungseinheiten (28.1 - 28.10) zur Datenkommunikation mit einer zugeordneten Verbrauchereinheit (20.1 - 20.10) vorgesehen sind, und wobei
die zugeordnete Verbrauchereinheit (20.1 - 20.10) dazu vorgesehen ist, eine Leistungskenngröße an die lokale Leistungsverwaltungseinheit (28.1 - 28.10) zu melden, die auf eine aktuell benötigte Leistung bezogen ist,
**dadurch gekennzeichnet, dass**
die lokale Leistungsverwaltungseinheit (28.1 - 28.10) dazu vorgesehen ist, auf Basis der gemeldeten Leistungskenngröße der Verbrauchereinheit (20.1 - 20.10) einen aktuell nicht zugeteilten Anteil einer für die Verbrauchereinheit (20.1 - 20.10) maximal verfügbaren Leistung als eine Leistungsreserve zu behandeln, welche als eine Verwaltungsmaßnahme einem Verbraucher (22) zuteilbar ist, und
zumindest eine lokale Leistungsverwaltungseinheit (28.1 - 28.10), die einer Verbrauchereinheit (20.1 - 20.10) mit mehreren Verbrauchern (22) zugeordnet ist, dazu vorgesehen ist, eine einen dieser Verbraucher (22) betreffende Verwaltungsmaßnahme in Abhängigkeit einer diesem Verbraucher (22) zugeordneten Priorität gegenüber den weiteren Verbrauchern (22) der Verbrauchereinheit (20.1 - 20.10) zu treffen.

2. Leistungsverwaltungseinrichtung nach Anspruch 1, **dadurch gekennzeichnet, dass**
die Leistungsdaten von Leistungen abhängen, die mittels der Leistungsversorgungseinheiten (14.1, 14.5, 14.8, 14.10) verfügbar sind.

3. Leistungsverwaltungseinrichtung nach Anspruch 1 oder 2, **dadurch gekennzeichnet, dass**
die fahrzeugweite Leistungsverwaltungsvorrichtung (30) dazu vorgesehen ist, einer lokalen Leistungsverwaltungseinheit (28.1 - 28.10) eine Leistungskenngröße mitzuteilen, die auf eine Leistung bezogen ist, welche für eine ihr zugeordnete Verbrauchereinheit (20.1 - 20.10) verfügbar ist.

4. Leistungsverwaltungseinrichtung nach einem der vorhergehenden Ansprüche,
**dadurch gekennzeichnet, dass**
die zugeordnete Verbrauchereinheit (20.1 - 20.10) dazu vorgesehen ist, bei einem anstehenden Einschaltvorgang eines Verbrauchers (22) der Verbrauchereinheit (20.1 - 20.10) eine Meldung an die lokale Leistungsverwaltungseinheit (28.1 - 28.10) zu senden.

5. Leistungsverwaltungseinrichtung nach einem der vorhergehenden Ansprüche,
**dadurch gekennzeichnet, dass**
zumindest eine der lokalen Leistungsverwaltungseinheiten (28.1 - 28.10) dazu vorgesehen ist, abhängig von einem Bedarf, der für einen Einschaltvorgang einer ihr zugeordneten Verbrauchereinheit (20.1 - 20.10) notwendig ist, eine Meldung an die fahrzeugweite Leistungsverwaltungsvorrichtung (30) mittels der Datenkommunikation zu senden.

6. Leistungsverwaltungseinrichtung nach Anspruch 5, **dadurch gekennzeichnet, dass**
die fahrzeugweite Leistungsverwaltungsvorrichtung (30) dazu vorgesehen ist, auf der Basis der Meldung und von Daten zumindest einer weiteren lokalen Leistungsverwaltungseinheit eine Verwaltungsmaßnahme zu treffen.

7. Leistungsverwaltungseinrichtung nach einem der vorhergehenden Ansprüche,
**dadurch gekennzeichnet, dass**
die lokalen Leistungsverwaltungseinheiten (28.1 - 28.10) jeweils einem unterschiedlichen Wagen (12.1 - 12.10) des Schienenfahrzeugs (10) zugeordnet sind.

8. Schienenfahrzeug, insbesondere schienengebundenes Triebfahrzeug, mit einem ersten Satz von Wagen (12.1, 12.5, 12.8, 12.10), die jeweils eine Leistungsversorgungseinheit (14.1, 14.5, 14.8, 14.10) aufweisen, und einem zweiten Satz von Wagen, und einer Leistungsverwaltungseinrichtung (26) nach einem der vorhergehenden Ansprüche, wobei die lokalen Leistungsverwaltungseinheiten (28.1 - 28.10) jeweils einem unterschiedlichen Wagen (12.1 - 12.10) zugeordnet sind.

9. Schienenfahrzeug nach Anspruch 8,
**dadurch gekennzeichnet, dass**
zumindest ein Wagen (12.5, 12.8) des ersten Satzes als Traktionswagen ausgebildet ist.

## Claims

1. Power management device for a rail vehicle (10), which has a number of consumer units (20.1 - 20.10), each of which comprise one or more electrical consumers (22) and are supplied by means of a number of power supply units (14.1, 14.5, 14.8, 14.10), having a set of local power management units (28.1 - 28.10), which are each assigned to at least one consumer unit (20.1 - 20.10) and a vehicle-wide power management apparatus (30), which receives power data of the power supply units (14.1, 14.5, 14.8, 14,10) during operation and is provided for data communication with the local power management units (28.1 - 28.10) at least on the basis of the power data, wherein the local power management units (28.1 - 28.10) are provided for data communication with an assigned consumer unit (20.1 - 20.10), and wherein
the assigned consumer unit (20.1 - 20.10) is provided to report a power parameter to the local power management unit (28.1 - 28.10) which is related to a currently required power,
**characterised in that**
on the basis of the reported power parameter of the consumer unit (20.1 - 20.10), the local power management unit (28.1 - 28.10) is provided to treat a currently not apportioned proportion of a maximum power available to the consumer unit (20.1 - 20.10) as a power reserve which can be apportioned to a consumer (22) as a management measure, and
at least one local power management unit (28.1 - 28.10), which is assigned to a consumer unit (20.1 - 20.10) with a number of consumers (22), is provided to take a management measure affecting one of these consumers (22) as a function of a priority assigned to this consumer (22) compared with the further consumers (22) of the consumer unit (20.1 - 20.10).

2. Power management device according to claim 1, **characterised in that**
the power data depends on power which is available by means of the power supply units (14.1, 14.5, 14.8, 14.10).

3. Power management device according to claim 1 or 2, **characterised in that**
the vehicle-wide power management apparatus (30) is provided to communicate a power parameter to a local power management unit (28.1 - 28.10), said power parameter relating to a power which is available to a consumer unit (20.1 - 20.10) assigned thereto.

4. Power management device according to one of the preceding claims,
**characterised in that**
the assigned consumer unit (20.1 - 20.10) is provided to send a report to the local power management unit (28.1 - 28.10) in the event of a pending switch-on process of a consumer (22) of the consumer unit (20.1 - 20.10).

5. Power management device according to one of the preceding claims,
**characterised in that**
at least one of the local power management units (28.1 - 28.10) is provided to send a report to the vehicle-wide power management apparatus (30) by means of data communication as a function of a requirement which is needed for a switch-on process of a consumer unit (20.1 - 20.10) assigned thereto.

6. Power management device according to claim 5, **characterised in that**
the vehicle-wide power management apparatus (30) is provided to take a management measure based on the report and on data of the at least one further local power management unit.

7. Power management device according to one of the preceding claims,
**characterised in that**
the local power management units (28.1 - 28.10) are assigned in each case to a different coach (12.1 - 12.10) of the rail vehicle (10).

8. Rail vehicle, in particular rail-bound traction vehicle, with a first set of coaches (12.1, 12.5, 12.8, 12.10), which each have a power supply unit (14.1, 14.5, 14.8, 14.10) and a second set of coaches, and a power management device (26) according to one of the preceding claims, wherein the local power management units (28.1 - 28.10) are assigned in each case to a different coach (12.1 - 12.10).

9. Rail vehicle according to claim 8,
**characterised in that**
at least one coach (12.5, 12.8) of the first set is embodied as a traction coach.

## Revendications

1. Dispositif de gestion de puissance d'un véhicule (10) ferroviaire, qui a plusieurs unités (20.1 à 20.10) de consommateur, qui comprennent chacune un ou plusieurs consommateurs (22) électriques et qui sont alimentées par plusieurs unités (14.1, 14.5, 14.8, 14.10) d'alimentation en puissance, comprenant un ensemble d'unités (28.1 à 28.10) locales de gestion de puissance, qui sont affectées chacune à au moins une unité (20.1 à 20.10) de consommateur, et un système (30) de gestion de puissance dans tout le véhicule, qui est prévu pour recevoir en fonctionnement des données de puissance des unités (14.1, 14.5, 14.8, 14.10) d'alimentation en puissance et pour la communication de données avec les unités (28.1 à 28.10) locales de gestion de puissance, au moins sur la base des données de puissance, dans lequel les unités (28.1 à 28.10) locales de gestion de puissance sont prévues pour la communication de données avec une unité (20.1 à 20.10) de consommateur affectée, et dans lequel
l'unité (20.1 à 20.10) de consommateur affectée est prévue pour signaler à l'unité (28.1 à 28.10) locale de gestion de puissance une grandeur caractéristique de puissance, qui se rapporte à une puissance nécessaire présentement,
**caractérisé en ce que**
l'unité (28.1 à 28.10) locale de gestion de puissance est prévue pour, sur la base de la grandeur caractéristique de puissance signalée de l'unité (20.1 à 20.10) de consommateur, traiter une proportion non affectée présentement d'une puissance disponible maximum pour l'unité (20.1 à 20.10) de consommateur comme une réserve de puissance, qui peut être attribuée à un consommateur (22) comme une mesure de gestion, et
au moins une unité (28.1 à 28.10) locale de gestion de puissance, qui est affectée à une unité (20.1 à 20.10) de consommateur ayant plusieurs consommateurs (22), est prévue pour prendre une mesure de gestion concernant ce consommateur (22), en fonction d'une priorité affectée à ce consommateur (22) par rapport aux autres consommateurs (22) de l'unité (20.1 à 20.10) de consommateur.

2. Dispositif de gestion de puissance suivant la revendication 1,
**caractérisé en ce que**
les données de puissance dépendent de puissances, qui sont disponibles au moyen des unités (14.1, 14.5, 14.8, 14.10) d'alimentation en puissance.

3. Dispositif de gestion de puissance suivant la revendication 1 ou 2,
**caractérisé en ce que**
le système (30) de gestion de puissance dans tout le véhicule est prévu pour communiquer à une unité (28.1 à 28.10) locale de gestion de puissance une caractéristique de puissance, qui se rapporte à une puissance, qui est disponible pour une unité (20.1 à 20.10) de consommateur, qui lui est affectée.

4. Dispositif de gestion de puissance suivant l'une des revendications précédentes,
**caractérisé en ce que**
l'unité (20.1 à 20.10) de consommateur affectée est prévue pour, lors d'une opération de mise en circuit imminente d'un consommateur (22) de l'unité (20.1 à 20.10) de consommateur, envoyer un message à l'unité (28.1 à 28.10) locale de gestion de puissance.

5. Dispositif de gestion de puissance suivant l'une des revendications précédentes,
**caractérisé en ce qu'**
au moins l'une des unités (28.1 à 28.10) locales de gestion de puissance est prévue pour envoyer, au moyen de la communication de données au système (30) de gestion de puissance de tout le véhicule, un message en fonction d'un besoin, qui est nécessaire pour une opération de mise en circuit de l'unité (20.1 à 20.10) de consommateur, qui lui est affectée.

6. Dispositif de gestion de puissance suivant la revendication 5,
**caractérisé en ce que**
le système (30) de gestion de puissance de tout le véhicule est prévu pour, sur la base du message et de données d'au moins une autre unité locale de gestion de puissance, prendre une mesure de gestion.

7. Dispositif de gestion de puissance suivant l'une des revendications précédentes,
**caractérisé en ce que**
les unités (28.1 à 28.10) locales de gestion de puissance sont affectées chacune à une voiture (12.1 à 12.10) différente du véhicule (10) ferroviaire.

8. Véhicule ferroviaire, notamment motrice guidée sur rail, comprenant un premier ensemble de voitures (12.1, 12.5, 12.8, 12.10), qui ont chacune une unité (14.1, 14.5, 14.8, 14.10) d'alimentation en puissance, et un deuxième ensemble de voitures et un dispositif (26) de gestion de puissance suivant l'une des revendications précédentes, dans lequel les unités (28.1 à 28.10) locales de gestion de puissance sont affectées chacune à une voiture (12.1 à 12.10) différente.

9. Véhicule ferroviaire suivant la revendication 8, **caractérisé en ce que**
au moins une voiture (12.5, 12.8) du premier ensemble est constituée en motrice.
